# EUROPÄISCHE PATENTSCHRIFT

(11) **EP 1 500 829 B1**
(45) Veröffentlichungstag und Bekanntmachung des Hinweises auf die Patenterteilung: **05.07.2006**
(21) Anmeldenummer: 04009585.3
(22) Anmeldetag: 22.04.2004
(51) Int. Cl.: F16B 37/06, F16B 19/10

(54) **Schraubverbindungsanordnung zum Verbinden zweier Bauteile**
Screw connecting arrangement for connecting two pieces
Dispositif à vis pour l'assemblage de deux pièces

(30) Priorität: 22.07.2003 DE 20311263 U
(43) Veröffentlichungstag der Anmeldung: 26.01.2005
(73) Patentinhaber: Böllhoff Verbindungstechnik GmbH, 33649 Bielefeld (DE)
(72) Erfinder: Hesse, Wolfgang, 33397 Rietberg (DE); Süssenbach, Rainer, 33803 Steinhagen (DE)
(74) Vertreter: Wehnert, Werner

(56) Entgegenhaltungen:
- DE-A- 2 818 588
- DE-A- 3 612 478
- DE-U- 9 310 735
- DE-U- 20 112 171
- FR-A- 1 406 174
- US-A- 4 182 216

## Beschreibung

Die vorliegende Erfindung betrifft eine Anordnung aus zwei Bauteilen und einer Schraubverbindung zum Verbinden der beiden Bauteile nach dem Oberbegriff des Anspruchs 1 sowie einen Blindniet hierfür.

Wird bei vorbekannten Schraubverbindungen zum Verbinden der beiden Bauteile die Schraube in den aus einem elastisch verformbaren Material bestehenden mutterartigen Blindniet eingedreht, so weitet sich ein elastisch verformbarer Abschnitt des Blindniets zu einem Nietwulst auf, der sich an das zugehörige Bauteil anlegt und damit die Verbindung in Achsrichtung herstellt. Ist der Nietwulst, der im Prinzip die Form eines Ringflansches hat, zu weich, so werden die Bauteile nicht mit ausreichender Haltekraft zusammengehalten. Ist dagegen der Nietwulst zu hart, so besteht die Gefahr, dass er spröde wird, was die Lebensdauer der Verbindung entsprechend verringert. Generell lässt sich sagen, dass derartige Schraubverbindungen begrenzt belastbar sind.

Aus dem DE-GM 201 12 171.9 der Anmelderin ist eine Schraubverbindungsanordnung aus einer Schraube und einem mutterartigen Blindniet bekannt, bei der der Blindniet ein hülsenförmiges Unterteil und ein hülsenförmiges Oberteil hat, deren Wandstärke so bemessen ist, dass das Unterteil eine hohe Steifigkeit und das Oberteil eine hohe Flexibilität hat. Das Ober- und Unterteil sind durch eine schulterförmig abgesetzte Übergangsstelle geringer Wandstärke einstückig miteinander verbunden, so dass beim Einschrauben der Schraube in das Unterteil des Blindniets die Wand des Oberteils auf der Außenfläche des Unterteils abrollt und hierdurch zu einem Nietwulst gefaltet wird. Hierdurch ergibt sich eine funktionssichere, hochbelastbare und dauerfeste Verbindung zwischen den beiden Bauteilen. Ein gewisser Nachteil dieser Schraubverbindungsanordnung besteht darin, dass der mutterartige Blindniet aufgrund der schulterförmig abgesetzten Übergangsstelle einen Hinterschnitt hat, der die Herstellung des Blindniets erschwert. Wird der Blindniet aus Kunststoff spritzgegossen, so ist aufgrund des Hinterschnitts ein trennbares Backenwerkzeug zum Formen des Blindniets erforderlich. Die Folge ist, dass nur eine relativ begrenzte Anzahl von Blindnieten gleichzeitig hergestellt werden können (begrenzte Nestauslegung) und eine entsprechend lange Entformungszeit erforderlich ist. Zum Erzielen einer ausreichenden Festigkeit der Schraubverbindungsanordnung sind unter Umständen relativ große Abmessungen für die Teile erforderlich.

Eine Anordnung nach dem Oberbegriff des Anspruchs 1 ist aus FR-A-1 406 174 oder aus DE-A-2 818 588 bekannt. Bei der dort offenbarten Anordnung haben die Rippen die Form von axial verlaufenden Vorsprüngen unterschiedlicher Form.

Der vorliegenden Erfindung liegt die Aufgabe zugrunde, eine Anordnung aus zwei Bauteilen und einer Schraubverbindung zum Verbinden der beiden Bauteile sowie einen Blindniet für diese Anordnung zu schaffen, die bei einfacher Herstellbarkeit und vergleichsweise geringen Abmessungen eine funktionssichere, hochbelastbare und dauerfeste Verbindung der beiden Bauteile sicherstellt.

Erfindungsgemäß wird dies durch eine Anordnung gemäß Patentanspruch 1 erreicht.

Bei der erfindungsgemäß ausgebildeten Anordnung ist das Befestigungsloch eines der beiden Bauteile als Mehreck, vorzugsweise als Quadrat, ausgebildet. Der Blindniet hat einen zylindrischen Grundkörper, der an seiner Außenseite mit einem mehrgängigen, vorzugsweise viergängigen, Wendel versehen ist, wobei die Anzahl der Wendelgänge gleich der Anzahl der Ecken des mehreckigen Befestigungsloches ist. Ferner sind die Abmessungen der Wendel und die Abmessungen des mehreckigen Befestigungsloches so aufeinander abgestimmt, dass im montierten Zustand die Wendelgänge die Ecken des mehreckigen Befestigungsloches weitgehend ausfüllen. Hierdurch entsteht eine Verdrehsicherung zwischen dem Blindniet und dem zugehörigen Bauteil. Wird bei der Montage die Schraube in die Aufnahmebohrung des Blindniets eingeschraubt, so werden der Grundkörper und die Wendel wegen der Verformbarkeit des Blindniets gefaltet, wodurch die Gänge der Wendel mit einem Teil ihrer Flanken an das zugehörige Bauteil angedrückt werden. Hierdurch entsteht eine funktionssichere, hoch belastbare und dauerfeste Verbindung der beiden Bauteile.

Bei der erfindungsgemäß ausgebildeten Schraubverbindungsanordnung wird somit der "Nietwulst" des Blindniets von der Wendel gebildet. Da die Faltzone im Vergleich zum Stand der Technik radial weiter außen liegt, lassen sich bei der erfindungsgemäß ausgebildeten Schraubverbindungsanordnung die gleiche Festigkeit wie im Stand der Technik mit kleineren Abmessungen der Schraube und des Blindniets einschließlich der Befestigungslöcher erzielen. Da im übrigen der erfindungsgemäß ausgebildete Blindniet keinen Hinterschnitt hat, vereinfacht sich seine Herstellung. So kann beim Spritzgießen des Blindniets aus Kunststoff ein einfaches Plattenwerkzeug verwendet werden. Zum Entformen des Blindniets aus dem Plattenwerkzeug genügt eine lineare Auswerferbewegung, bei der sich die Wendel selbständig drehend aus dem Plattenwerkzeug entformt.

Vorzugsweise hat die Wendel die Form eines Spitzgewindes und einen Steigungswinkel, der größer als sein Selbsthemmungswinkel ist. Der Blindniet wird daher bei der Montage in das mehreckige Befestigungsloch des betreffenden Bauteils in Axialrichtung eingedrückt, wobei durch die große Wendelsteigung der Blindniet eine drehende Bewegung ausführt. Hat das Bauteil eine ausreichende Dicke, so entsteht aufgrund des schraubenförmigen Verlaufs der Wendel eine als Verliersicherung wirkende klemmende Anlage zwischen der Wendel und dem mehreckigen Befestigungsloch. Bei relativ geringer Wandstärke des betreffenden Bauteils empfiehlt es sich, an der Außenseite des Grundkörpers des Blindniets Noppen als weitere Verliersicherung vorzusehen.

In weiterer Ausgestaltung der Erfindung ist der Grundkörper des Blindniets an seinem einen Ende mit einem Flansch versehen, der auf einer Seite eine Dichtlippe hat, die beim Herstellen der Schraubverbindung in Dichtungsanlage mit dem zugehörigen Bauteil gedrückt wird. Ist der Grundkörper des Blindniets an seinem anderen Ende durch einen Boden verschlossen, so entsteht eine wasserdichte Schraubverbindung.

Sowohl der Blindniet wie auch die Schraube können aus Kunststoff hergestellt werden. Es entsteht dann eine "sortenreine" Ganzkunststofflösung, die im Hinblick auf Herstellungskosten, Gewicht und Recycling besonders vorteilhaft ist.

Weitere vorteilhafte Ausgestaltungen der Erfindung ergeben sich aus den Unteransprüchen.

Anhand der Zeichnungen werden Ausführungsbeispiele der Erfindung näher erläutert. Es zeigt:
Figur 1 eine Seitenansicht einer Schraube für eine Schraubverbindungsanordnung gemäß der Erfindung;
Figur 2 eine Seitenansicht eines mutterartigen Blindniets für die Schraubverbindungsanordnung;
Figur 3 einen Längsschnitt durch den Blindniet der Figur 2 in vergrößertem Maßstab;
Figur 4 eine Schnittansicht in Blickrichtung der Pfeile IV-IV in Figur 3;
Figur 5 eine Schnittansicht in Blickrichtung der Pfeile V-V in Figur 3;
Figur 6 eine perspektivische Ansicht des Blindniets in Figur 2;
Figur 7 eine der Figur 2 entsprechende Seitenansicht einer abgewandelten Ausführungsform eines Blindniets;
Figur 8 ein quadratisches Befestigungsloch eines der zu verbindenden Bauteile;
Figur 9 eine der Figur 2 entsprechende Seitenansicht des Blindniets, der zu Beginn der Montage in das zugehörige Bauteil eingesteckt ist;
Figur 10 eine Schnittansicht in Blickrichtung der Pfeile 10-10 in Figur 9;
Figur 11 eine Seitenansicht der fertig montierten Schraubverbindungsanordnung;
Figur 12 einen Längsschnitt durch die Schraubverbindungsanordnung in Figur 11;
Figur 13 eine Draufsicht auf den Blindniet in Figur 2.

Die in den Figuren 11 und 12 im montierten Zustand dargestellte Schraubverbindungsanordnung dient zum Verbinden zweier plattenförmiger Bauteile 2, 4, welche nur von einer Seite her, in der Zeichnung nur von der Oberseite her, zugänglich sind. Beispielsweise handelt es sich bei dem Bauteil 2 um das Karosserieblech und bei dem Bauteil 4 um die Radhausschale für ein Kraftfahrzeug. Es versteht sich jedoch, dass die Erfindung hierauf nicht beschränkt ist.

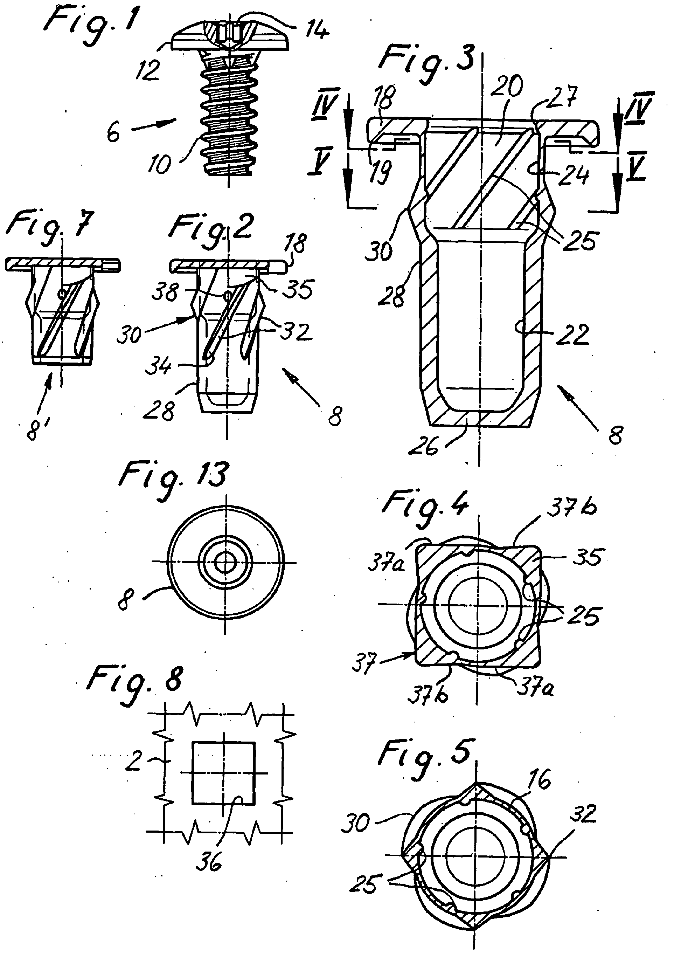

Die Schraubverbindungsanordnung besteht aus einer Schraube 6, die in Figur 1 als Einzelteil dargestellt ist, und einem mutterartigen Blindniet 8, der in den Figuren 2 bis 6 als Einzelteil dargestellt ist.

Wie in Figur 1 zu sehen ist, besteht die Schraube 6 in üblicher Weise aus einem Schaft mit einem Gewinde 10 und einem Schraubenkopf 12, der mit einer Schlüsselaufnahme 14 zum Drehen der Schraube versehen ist. Die Schraube 6 ist im dargestellten Ausführungsbeispiel als selbstfurchende Schraube mit rechtsgängigem Rundgewinde ausgebildet, die vorzugsweise aus einem hochfesten Kunststoff besteht, wenngleich auch eine Schraube aus Stahl verwendet werden könnte.

Der in den Figuren 2 bis 6 dargestellte mutterartige Blindniet 8 hat einen hülsenförmigen Grundkörper 16, der an seinem einen axialen Ende mit einem Flansch 18 versehen ist. Der Flansch 18 hat an seiner Unterseite eine Dichtlippe 19, deren Funktion weiter unten erläutert wird.

Der Grundkörper 16 hat eine Aufnahmebohrung 20 zur Aufnahme der Schraube 6. Die Aufnahmebohrung 20 besteht aus einem unteren Bohrungsabschnitt 22 kleineren Durchmessers und einem oberen Bohrungsabschnitt 24 größeren Durchmessers, die durch eine Fase miteinander verbunden sind. Der Durchmesser des Bohrungsabschnittes 22 ist hierbei so bemessen, dass die selbstfurchende Schraube 6 beim Einschrauben in den Blindniet 8 in diesem Bereich ein Gewinde formt. Stattdessen könnte jedoch der Blindniet 8 im Bereich des Bohrungsabschnittes 22 auch mit einem vorgeformten Gewinde zur Aufnahme des Gewindes 10 der Schraube 6 versehen sein.

Der Durchmesser des Bohrungsabschnittes 24 entspricht dem Außendurchmesser des Gewindes 10 der Schraube 6, so dass die Schraube 6 ungehindert in den Bohrungsabschnitt 24 eingeführt werden kann. Aufgrund des größeren Durchmessers des Bohrungsabschnittes 24 ist die Wandstärke des Blindniets 8 in diesem Bereich verringert, wobei die Wandstärke so gewählt wird, dass der Blindniet 8 in diesem Bereich relativ leicht verformt werden kann, wie noch genauer erläutert wird.

Der Blindniet 8 ist an seiner Innenseite im Bereich des Bohrungsabschnittes 24 mit mehreren wendelförmig verlaufenden Stützrippen 25 versehen. (Fig. 3-6). Im dargestellten Ausführungsbeispiel sind fünf Stützrippen vorgesehen, die linksgängig und somit gegensinnig zum Gewinde 10 der Schraube 6 ausgebildet sind. Die Stützripp'en 25 verlaufen von einem radial nach innen ragenden ringförmigen Vorsprung 27 am Flanschende des Grundkörpers 16 aus bis zum entgegengesetzten Ende des Bohrungsabschnittes 24. Der Zweck der Stützrippen 25 wird weiter unten genauer erläutert.

Der Grundkörper 16 ist an seinem vom Flansch 18 abgewandten axialen Ende von einem Boden 26 verschlossen, so dass das Innere der Aufnahmebohrung 20 an diesem Ende wasserdicht ist. Falls die Schraubverbindung nicht wasserdicht sein muss, kann das betreffende Ende des Grundkörpers 16 auch offen bleiben, wie dies bei der abgewandelten Ausführungsform des Blindniets 8' in Figur 7 der Fall ist.

Der Grundkörper 16 ist an seiner zylindrisch ausgebildeten Außenseite 28 mit einer Wendel 30 versehen. Die Wendel 30 hat im dargestellten Ausführungsbeispiel vier Gänge 32, die schraubenförmig um die zylindrische Außenseite 28 des Grundkörpers 16 über einen axialen Bereich entsprechend dem Bohrungsabschnitt 24 und einem Teil des Bohrungsabschnittes 22 verlaufen. Die Wendel 30 hat die Form eines rechtsgängigen Spitzgewindes, d.h., dass die Gänge 32 der Wendel 30 in einem Axialschnitt (Figur 3) ein Dreieckprofil haben. Die Gänge 32 der Wendel 30 laufen an ihrem vom Flansch 18 abgewandten Ende in einer Fase 34 aus, was das Einführen des Blindniets 8 in ein Befestigungsloch 36 des zugehörigen Bauteils 2 erleichtert.

Wie in Figur 8 zu sehen ist, ist das Befestigungsloch 36 des Bauteils 2 quadratisch ausgebildet. Die Anzahl der Ecken des Befestigungsloches 36 ist somit gleich der Anzahl der Gänge 32 der Wendel 30. Die Abmessungen des Befestigungsloches 36 und des Blindnietes 8 sind hierbei so gewählt, dass die Seitenlänge des quadratischen Befestigungsloches 36 dem Durchmesser der zylindrischen Außenseite 28 des Grundkörpers 16 entspricht. Der Außendurchmesser der Wendel 30 ist geringfügig kleiner als der Abstand jeweils zweier diagonal gegenüberliegender Ecken des mehreckigen Befestigungsloches 36. Das Profil des Spitzgewindes der Wendel 30 ist hierbei so gewählt, dass es im montierten Zustand nahezu vollständig die Ecken des quadratischen Befestigungsloches 36 ausfüllt. Der Steigungswinkel der Wendel 30 ist größer als der Selbsthemmungswinkel; vorzugsweise liegt er im Bereich von 50° bis 60°, insbesondere bei ca. 55°.

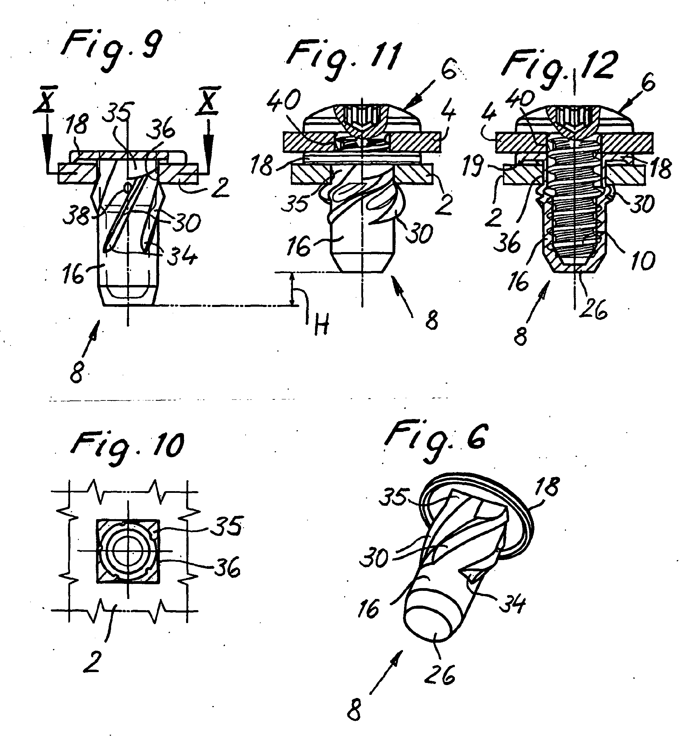

Wie insbesondere in den Figuren 4 und 6 zu sehen ist, gehen die Gänge 32 der Wendel 30 an ihren am Flansch 18 angrenzenden Ende in einen querschnittserweiterten Körperabschnitt 35 über. Der querschnittserweiterte Körperabschnitt 35 wird einerseits durch eine radiale Vergrößerung der Wendelgänge 32 selbst und andererseits durch zusätzliches Material zwischen den Wendelgängen gebildet, und zwar derart, dass der Körperabschnitt 35 eine Außenfläche 37 hat, deren Querschnittsform der Form des mehreckigen Befestigungsloches 36 entspricht. Im dargestellten Ausführungsbeispiel hat daher der Körperabschnitt 35 angrenzend am Flansch 18 (in der Schnittebene IV-IV, siehe Figuren 3, 4) einen praktisch quadratischen Querschnitt, der im montierten Zustand im wesentlichen formschlüsig von dem quadratischen Befestigungsloch 36 des Bauteils 2 aufgenommen wird, wie noch genauer erläutert wird.

Der einstückig ausgebildete Blindniet 8 besteht zweckmäßigerweise ebenfalls aus einem Kunststoff, so dass Schraube 6 und Blindniet 8 eine leicht recycelbare Ganzkunststofflösung bilden. In Frage kommt ein schlagzähes Polyamid oder ein anderer schlagzäher Kunststoff, ein elastomerer Kunststoff oder Gummi. Das Material muss in jedem Fall so gewählt werden, dass es ausreichend elastisch verformbar ist, um eine (noch zu beschreibende) Nietfaltung des Blindniets 8 zu ermöglichen und andererseits für eine ausreichende Festigkeit der Verbindung der beiden Bauteile 2, 4 zu sorgen.

Anhand der Figuren 9 bis 12 wird nun der Zusammenbau der beschriebenen Verbindungsanordnung erläutert. Zum Verbinden des Blindniets 8 mit dem unteren Bauteil 2 wird der Blindniet 8 zunächst in das quadratische Befestigungsloch 36 des Bauteils 2 axial eingedrückt (siehe Figur 9). Hierbei dienen die Fasen 34 an den Enden der Gänge 32 der Wendel 30 als Findehilfe. Beim axialen Eindrücken führt der Blindniet 8 aufgrund der großen Steigung der viergängigen Wendel 30 eine rechtsdrehende Bewegung aus, bis der Flansch 18 an der Oberseite des Bauteils 2 anliegt. Hierbei wird der am oberen Ende der Wendel 30 vorgesehene quadratische Körperabschnitt 35 von dem quadratischen Befestigungsloch 36 des Bauteils 2 im wesentlichen formschlüssig aufgenommen, so dass der Blindniet 8 im Bauteil 2 drehfest sitzt.

Da die Innenflächen des quadratischen Befestigungsloches 36 nicht an den schraubenförmigen Verlauf der Gänge 32 der Wendel 30 angepasst sind, kommt es zu einer leichten Selbsthemmung zwischen der Wendel 30 und der Wandfläche des Befestigungsloches 36, welche umso größer ist, je größer die Dicke des plattenförmigen Bauteils 2 ist. Die Dicke des plattenförmigen Bauteils 2 kann beispielsweise im Bereich von 0,8 bis 2,5 mm liegen, wobei an dieser Stelle zu erwähnen ist, dass die Verbindungsanordnung nicht an eine spezielle Dicke der plattenförmigen Bauteile angepasst werden muss, sondern für einen größeren Bereich unterschiedlicher Dicken geeignet ist.

Wie in den Figuren 2, 6 und 9 zu sehen ist, können zusätzliche Noppen 38 an der Außenseite 28 des Grundkörpers vorgesehen werden, die als weitere Verliersicherung, insbesondere bei relativ kleiner Dicke des plattenförmigen Bauteils 2, dienen.

Es wird nun das obere Bauteil 4 auf den Flansch 18 des Blindniets 8 so aufgelegt, dass ein Befestigungsloch 40 des Bauteils 4 zu der Aufnahmebohrung 20 des Blindniets 8 fluchtet. Das Befestigungsloch 40 des Bauteils 4 ist kreisrund und hat einen Durchmesser, der dem Außendurchmesser des Gewindes 10 der Schraube 6 entspricht. Die Schraube 6 kann daher problemlos durch das Befestigungsloch 40 hindurch in die Aufnahmebohrung 20 des Blindniets 8 eingeführt und mit dem Blihdhiet 8 verschraubt werden. Wie bereits weiter oben erwähnt, formt hierbei das Gewinde 10 der Schraube 6 ein entsprechendes Gewinde in der Wand des Grundkörpers 16 im Bereich des Bohrungsabschnittes 22.

Beim Einschrauben der Schraube 6 in den Blindniet 8 wird der untere Abschnitt des Grundkörpers 16 (im Bereich des Bohrungsabschnittes 22) um einen Hub H nach oben gegen die Unterseite des Bauteils 2 gezogen, siehe Fig. 11. Hierbei falten sich der dünnwandige Abschnitt des Grundkörpers 16 und die Gänge 32 der Wendel 30 im Bereich des Bohrungsabschnittes 22 so, dass die entsprechenden Flanken der Wendel 30 leicht rechtsdrehend verformt und gegen die Unterseite des Bauteils 2 angedrückt werden. Es kommt somit zu einer partiellen Anlage zwischen den betreffenden Flanken der Wendel 30 und dem Bauteil 2, wodurch die Schraubverbindung zwischen den Bauteilen 2 und 4 erreicht ist.

Um diese Faltung zu ermöglichen, wird die Wandstärke des Grundkörpers 16 im Bereich des Bohrungsabschnittes 24 entsprechend dünn gewählt. Der hierdurch gebildete freie Zwischenraum zwischen dem Außenumfang des Gewindes 10 der Schraube 6 und der Innenwand des Bohrungsabschnittes 24 wird durch die Stützrippen 25 überbrückt, deren Steigung gegensinnig (linksgängig) zu der Steigung des Gewindes 10 der Schraube 6 ist. Da die Stützrippen 25 nicht axial, sondern schräg zur Achsrichtung verlaufen, knicken sie bei dem Faltvorgang unbehindert in Achsrichtung, wobei sie jedoch aufgrund ihrer Anlage am Außenumfang des Gewindes 10 der Schraube 6 ein Ausweichen des Materials des Blindniets 6 radial nach innen verhindern. Außerdem drücken sie die Außenwand des Körperabschnitts 35 am Ende der Wendel 30 in Anlage mit der Umfangsfläche des Befestigungsloches 36 des Bauteils 2.

Der hierdurch erzielte Formschluss zwischen dem Körperabschnitt 35 und dem Befestigungsloch 36 sorgt somit für eine Drehsicherung des Blindniets 8 bei der Montage, und zwar sowohl beim Formen des Gewindes innerhalb des Bohrungsabschnittes 22 des Blindniets 8 wie auch bei dem Faltvorgang. Genauer gesagt, kommt es bei diesen Montageschritten zu einer vollflächigen Anlage zwischen den hälftigen Flächenabschnitten 37a der Außenfläche 37 des Körperabschnitts 35 und den entsprechenden Flächenabschnitten des Befestigungsloches 36 (siehe Fig. 4), wodurch das durch die rechtsdrehende Bewegung der Schraube 6 erzeugte Drehmoment in ausreichender Flächenpressung aufgenommen wird. Da die zu den Flächenabschnitten 37a benachbarten Flächenabschnitte 37b hierbei keine drehmomentübertragende Funktion erfüllen, können sie, wie in Fig. 4 zu sehen ist, leicht zurückversetzt ausgebildet werden, was der Herstellung des Blindniets mittels eines Plattenwerkzeuges (nicht gezeigt) das Entformen aus der Spritzgießform erleichtert.

Der Schraub-und Faltvorgang kann durch Anlage der Schraube 6 am Boden 26 des Blindniets 8 beendet werden. Eine andere Möglichkeit besteht darin, das Schraubmoment, mit dem die Schraube 6 in den Blindniet 8 eingeschraubt wird, zu begrenzen, so dass der Schraubvorgang nach Anlage des Schraubenkopfes 12 am Bauteil 4 durch Erreichen des Grenzmomentes beendet wird. Dies erlaubt es, die beschriebene Verbindungsanordnung für plattenförmige Bauteile unterschiedlicher Dicke einzusetzen.

Im montierten Zustand wird die Dichtlippe 19 am Flansch 18 des Blindniets 8 gegen die Oberseite des Bauteils 2 angedrückt, wodurch eine Abdichtung zur Umgebung erzielt wird. Da ferner das untere Ende des Blindniets 8 durch den Boden 26 verschlossen ist, ist die Verbindungsanordnung wasserdicht.

Bei dem beschriebenen Ausführungsbeispiel ist die Wendel 30 viergängig und das Befestigungsloch 36 viereckig ausgebildet. Es versteht sich jedoch, dass die Anzahl der Gänge der Wendel 30 und die Anzahl der Ecken des Befestigungsloches 36 auch anders gewählt werden können; so sind Lösungen mit z.B. drei, fünf oder sechs Wendelecken bzw. Ecken des Mehrecks denkbar. Ferner sind im beschriebenen Ausführungsbeispiel das Gewinde 10 der Schraube 6 und die Wendel 30 des Blindniets 8 rechtsgängig ausgebildet, während die Stützrippen 25 im Inneren des Blindniets 8 linksgängig ausgebildet sind. Es versteht sich jedoch, dass die Anordnung auch umgekehrt getroffen werden kann.

## Patentansprüche

1. Anordnung aus zwei Bauteilen (2, 4) und einer Schraubverbindung zum Verbinden der Bauteile (2, 4), welche Schraubverbindung eine Schraube (6) und einen mutterartigen Blindniet (8) aufweist, die in Befestigungslöcher (36, 40) der beiden Bauteile (2, 4) einsteckbar und zum Herstellen der Verbindung miteinander verschraubbar sind, wobei der Blindniet (8) aus einem elastisch verformbaren Material besteht und einen Grundkörper (16) aufweist, der mit einer Aufnahmebohrung (20) für das Gewinde (10) der Schraube (6) und an seiner Außenseite (28) mit mehreren Rippen versehen ist, so dass beim Einschrauben der Schraube (6) in die Aufnahmebohrung (20) des Blindniets (8) der Grundkörper (16) und die Rippen gefaltet werden, **dadurch gekennzeichnet, dass** das Befestigungsloch (36) eines der Bauteile (2, 4) als Mehreck ausgebildet ist und die Rippen des Grundkörpers (16) des Blindniets (8) im unverformten Zustand aus einer mehrgängigen Wendel (30) bestehen, deren Außendurchmesser dem Abstand jeweils zweier diagonal gegenüberliegenden Ecken des mehreckigen Befestigungsloches (36) entspricht und deren Gängeanzahl gleich der Anzahl der Ecken des mehreckigen Befestigungsloches (36) ist, so dass beim Einschrauben der Schraube (6) und Falten der Wendel (30) die Gänge (32) der Wendel (30) mit einem Teil ihrer Flanken an das zugehörige Bauteil (2) angedrückt werden.

2. Anordnung nach Anspruch 1, **dadurch gekennzeichnet, dass** die Seitenlänge des mehreckigen Befestigungsloches (36) dem Außendurchmesser des zylindrisch ausgebildeten Grundkörpers (16) entspricht.

3. Anordnung nach Anspruch 1 oder 2, **dadurch gekennzeichnet, dass** die Aufnahmebohrung (20) des Grundkörpers (16) einen Bohrungsabschnitt (22) kleineren Durchmessers zwecks Gewindeeingriff mit der Schraube (6) und einen Bohrungsabschnitt (24) größeren Durchmessers zur Verringerung der Wandstärke des Grundkörpers (16) hat, in dessen Bereich die Faltung des Grundkörpers (16) und der Wendel (30) erfolgt.

4. Anordnung nach Anspruch 3, **dadurch gekennzeichnet, dass** der Grundkörper (16) an seiner Innenseite im Bereich seines Bohrungsabschnittes (24) größeren Durchmessers mit mehreren wendelförmig verlaufenden Stützrippen (25) versehen ist, die beim Faltvorgang an dem Außenumfang des Gewindes (10) der Schraube (6) anliegen.

5. Anordnung nach einem der vorhergehenden Ansprüche, **dadurch gekennzeichnet, dass** die Wendel (30) die Form eines Spitzgewindes hat.

6. Anordnung nach Anspruch 5, **dadurch gekennzeichnet, dass** das Profil des Spitzgewindes der Wendel (30) an die Ecken des mehreckigen Befestigungsloches (36) angepasst ist.

7. Anordnung nach einem der vorhergehenden Ansprüche, **dadurch gekennzeichnet, dass** die Wendel (30) einen Steigungswinkel hat, der größer als der Selbsthemmungswinkel der Wendel (30) ist.

8. Anordnung nach einem der vorhergehenden Ansprüche, **dadurch gekennzeichnet, dass** die Wendel (30) viergängig und das mehreckige Befestigungsloch (36) quadratisch ist.

9. Anordnung nach einem der vorhergehenden Ansprüche, **dadurch gekennzeichnet, dass** die Gänge (32) der Wendel (30) an ihrem einen Ende jeweils eine auslaufende Fase (34) als Findehilfe beim Einführen des Blindniets (8) in das mehreckige Befestigungsloch (36) aufweisen.

10. Anordnung nach einem der vorhergehenden Ansprüche, **dadurch gekennzeichnet, dass** der Grundkörper (16) des Blindniets (8) an seinem einen Ende einen Flansch (18) hat, der im eingebauten Zustand zwischen den Bauteilen (2, 4) liegt und an einer Seite mit einer Dichtlippe (19) versehen ist.

11. Anordnung nach Anspruch 10, **dadurch gekennzeichnet, dass** die Gänge (32) der Wendel (30) an ihren an dem Flansch (18) angrenzenden Ende in einen querschnittserweiterten, die Zwischenräume der Gänge (32) ausfüllenden Körperabschnitt (35) mit einer Außenfläche (37) übergehen, die im wesentlichen an die Querschnittsform des mehreckigen Befestigungsloches (36) angepasst ist.

12. Anordnung nach einem der vorhergehenden Ansprüche, **dadurch gekennzeichnet, dass** der Grundkörper (16) des Blindniets (8) an seinem von den Bauteilen (2, 4) abgewandten Ende durch einen Boden (26) verschlossen ist.

13. Anordnung nach einem der Ansprüche 1 bis 11, **dadurch gekennzeichnet, dass** der Grundkörper (16) des Blindniets (8) an seinem von den Bauteilen (2, 4) abgewandten Ende offen ist.

14. Anordnung nach einem der vorhergehenden Ansprüche, **dadurch gekennzeichnet, dass** das Befestigungsloch (40) des anderen Bauteils (4) kreisrund ist und einen Durchmesser hat, der dem Außendurchmesser des Gewindes (10) der Schraube (6) entspricht.

15. Anordnung nach einem der vorhergehenden Ansprüche, **dadurch gekennzeichnet, dass** der Grundkörper (16) des Blindniets (8) an seiner Außenseite Noppen (38) hat, die als Verliersicherung dienen.

16. Anordnung nach einem der vorhergehenden Ansprüche, **dadurch gekennzeichnet, dass** die Schraube (6) als selbstfurchende Schraube ausgebildet ist, die beim Einschrauben in einen glatt ausgebildeten Bohrungsabschnitt (22) der Aufnahmebohrung (20) des Grundkörpers (16) des Blindniets (8) ein entsprechendes Gewinde formt.

17. Anordnung nach einem der Ansprüche 1 bis 15, **dadurch gekennzeichnet, dass** die Aufnahmebohrung (20) des Grundkörpers (16) des Blindniets (8) ein vorgeformtes Gewinde hat.

18. Anordnung nach einem der vorhergehenden Ansprüche, **dadurch gekennzeichnet, dass** die Schraube (6) aus Kunststoff oder Metall besteht.

19. Anordnung nach einem der vorhergehenden Ansprüche, **dadurch gekennzeichnet, dass** der Blindniet (8) aus einem schlagzähen Polyamid oder einem anderen schlagzähen Kunststoff besteht.

20. Anordnung nach einem der Ansprüche 1 bis 15, **dadurch gekennzeichnet, dass** der Blindniet (8) aus einem elastomeren Kunststoff oder Gummi besteht.

21. Blindniet für eine Anordnung nach einem der vorhergehenden Ansprüche.

## Claims

1. An assembly of two structural members (2, 4) and a screw connection for joining the structural members (2, 4), which screw connection comprises a screw (6) and a nut-like blind rivet (8) which is adapted to be inserted into mounting holes (36, 40) of the two structural members (2, 4) and to be threadingly engaged to each other for making the connection, the blind rivet (8) being made of a resiliently defonnable material and comprising a base member (16) including a receiving bore (20) for the thread (10) of the screw (6) and having an outside provided with a plurality of ribs such that when the screw (6) is threadingly engaged into the receiving bore (20) of the blind rivet (8) the base member (16) and the ribs are folded, **characterized in that** the mounting hole (36) of one of the structural members (2, 4) is of polygonal shape and the ribs of the base member (16) of the blind rivet (8) when in an undeformed condition comprises a multi-turn helix (30) of an outer diameter corresponding to the distance between two diagonally opposite corners of the polygonal mounting hole (36) and the number of turns of which is similar to the number of corners of the polygonal mounting hole (36) such that when the thread is being screwed thereinto and the helix (30) is folded the turns (32) of the helix have parts of their flanks pressed against the associated structural member (2).

2. The assembly of claim 1 **characterized in that** the length of the sides of the polygonal mounting hole (36) corresponds to the outer diameter of the cylindrical base member (16).

3. The assembly of claim 1 or claim 2 **characterized in that** the receiving bore (20) of the base member (16) has a bore portion (22) of smaller diameter for threaded engagement to the screw (6), and a bore portion (24) of greater diameter for reducing the wall thickness of the base member (16) where the base member (16) and the helix (30) are being folded.

4. The assembly of claim 3 **characterized in that** the base member (16) is provided at its inner side, in the area of its wall portion (24) of greater diameter, with a plurality of helically extending support ribs (25) which engage the outer periphery of the thread (10) of the screw (6) during the folding operation.

5. The assembly of any of the preceding claims **characterized in that** the helix (30) comprises V-shaped threads.

6. The assembly of claim 5 **characterized in that** the V-shaped threads of the helix (30) have a profile adapted to the corners of the polygonal mounting hole (36).

7. The assembly of any of the preceding claims **characterized in that** the helix (30) has a lead angle exceeding the self-locking angle of the helix (30).

8. The assembly of any of the preceding claims **characterized in that** the helix (30) comprises four threads and the polygonal mounting hole (36) is of square shape.

9. The assembly of any of the preceding claims **characterized in that** the threads (32) of the helix (30) each terminate in a chamfer (34) for facilitating insertion of the blind rivet (8) into the polygonal mounting hole (36).

10. The assembly of any of the preceding claims **characterized in that** the base member (16) of the blind rivet (8) has an end provided with a flange (18) sandwiched between the structural members (2, 4) when assembled and being provided with a sealing lip (19) on one side thereof.

11. The assembly of claim 10 **characterized in that** the threads (32) of the helix (30) have, at an end adjacent the flange (18), an outer surface (37) merge into a body portion (35) of increased cross-section and filling the gaps between the threads (32), which outer surface is substantially adapted to the cross-sectional shape of the polygonal mounting hole (36).

12. The assembly of any of the preceding claims **characterized in that** the base member (16) of the blind rivet (8) is closed by a bottom (26) at an end remote from the structural members (2, 4).

13. The assembly of any of claims 1 to 11 **characterized in that** base member (16) of the blind rivet (8) is open at an end remote from the structural members (2, 4).

14. The assembly of any of the preceding claims **characterized in that** the mounting hole (40) of the other structural member (4) is of circular shape and has a diameter corresponding to the outer diameter of the thread (10) of the screw (6).

15. The assembly of any of the preceding claims **characterized in that** the base member (16) of the blind rivet (8) has an outside provided with pegs (38) for preventing inadvertent removal of the screw prior to assembly thereof.

16. The assembly of any of the preceding claims **characterized in that** the screw (6) is a thread-forming screw which when threadingly engaged into a smooth bore section (22) of the receiving bore (20) of the base member (16) of the blind rivet (8) forms a matingly shaped thread.

17. The assembly of any of claims 1 to 15 **characterized in that** the receiving bore (20) of the base member (16) of the blind rivet (8) has a pre-formed thread.

18. The assembly of any of the preceding claims **characterized in that** the screw (6) is made from plastic material or metal.

19. The assembly of any of the preceding claims **characterized in that** the blind rivet (8) is made of an impact resistant polyamide or another impact resistant plastic material.

20. The assembly of any of claims 1 to 15 **characterized in that** the blind rivet (8) is made of an elastomeric plastic material or rubber.

21. Blind rivet for an assembly of any of the preceding claims.

## Revendications

1. Dispositif composé de deux pièces (2, 4) et d'un assemblage vissé pour l'assemblage des pièces (2, 4), lequel assemblage vissé présente une vis (6) et un rivet aveugle (8) de type écrou qui peuvent être enfichés dans des trous de fixation (36, 40) des deux pièces (2, 4) et peuvent être vissés l'un avec l'autre pour la réalisation de l'assemblage, le rivet aveugle (8) étant composé d'un matériau déformable de façon élastique et présentant un corps de base (16) qui est muni d'un alésage de réception (20) pour le filet (10) de la vis (6) et, sur son côté extérieur (28), de plusieurs nervures de sorte que, lors du vissage de la vis (6) dans l'alésage de réception (20) du rivet aveugle (8), le corps de base (16) et les nervures sont pliés, **caractérisé en ce que** le trou de fixation (36) d'une des pièces (2, 4) est constitué en tant que polygone et les nervures du corps de base (16) du rivet aveugle (8) se composent à l'état non déformé d'une hélice (30) à spires multiples dont le diamètre extérieur correspond à l'intervalle entre respectivement deux angles diagonalement opposés du trou de fixation (36) polygonal et dont le nombre de spires est égal au nombre d'angles du trou de fixation (36) polygonal de sorte que, lors du vissage de la vis (6) et du pliage de l'hélice (30), les spires (32) de l'hélice (30) sont pressées avec une partie de leurs flancs sur la pièce (2) associée.

2. Dispositif selon la revendication 1, **caractérisé en ce que** la longueur latérale du trou de fixation (36) polygonal correspond au diamètre extérieur du corps de base (16) constitué de façon cylindrique.

3. Dispositif selon la revendication 1 ou 2, **caractérisé en ce que** l'alésage de réception (20) du corps de base (16) a un tronçon d'alésage (22) de diamètre inférieur en vue d'un engrènement fileté avec la vis (6), et un tronçon d'alésage (24) de diamètre supérieur pour la réduction de l'épaisseur de paroi du corps de base (16), dans la zone duquel intervient le pliage du corps de base (16) et de l'hélice (30).

4. Dispositif selon la revendication 3, **caractérisé en ce que** le corps de base (16), sur son côté intérieur dans la zone de son tronçon d'alésage (24) de diamètre supérieur, est muni de plusieurs nervures d'appui (25) disposées en forme d'hélice et qui, lors du processus de pliage, appuient sur la circonférence extérieure du filet (10) de la vis (6).

5. Dispositif selon une des revendications précédentes, **caractérisé en ce que** l'hélice (30) a la forme d'un filet triangulaire.

6. Dispositif selon la revendication 5, **caractérisé en ce que** le profil du filet triangulaire de l'hélice (30) est adapté aux angles du trou de fixation (36) polygonal.

7. Dispositif selon une des revendications précédentes, **caractérisé en ce que** l'hélice (30) a un angle d'inclinaison qui est supérieur à l'angle de blocage automatique de l'hélice (30).

8. Dispositif selon une des revendications précédentes, **caractérisé en ce que** l'hélice (30) a quatre spires et **en ce que** le trou de fixation (36) polygonal est carré.

9. Dispositif selon une des revendications précédentes, **caractérisé en ce que** les spires (32) de l'hélice (30) présentent, à une extrémité, respectivement un chanfrein (34) de sortie en tant qu'aide au repérage lors de l'introduction du rivet aveugle (8) dans le trou de fixation (36) polygonal.

10. Dispositif selon une des revendications précédentes, **caractérisé en ce que** le corps de base (16) du rivet aveugle (8) a, à une extrémité, une bride (18) qui, à l'état monté, est située entre les pièces (2, 4) et qui est munie d'un bec d'étanchéité (19) sur un côté.

11. Dispositif selon la revendication 10, **caractérisé en ce que** les spires (32) de l'hélice (30), à leur extrémité jouxtant la bride (18), se transforment en un tronçon de corps (35) de section évasée et remplissant les espaces intermédiaires des spires (32), avec une surface extérieure (37) qui est essentiellement adaptée à la forme de section du trou de fixation (36) polygonal.

12. Dispositif selon une des revendications précédentes, **caractérisé en ce que** le corps de base (16) du rivet aveugle (8), à son extrémité éloignée des pièces (2, 4), est fermé par un fond (26).

13. Dispositif selon une des revendications 1 à 11, **caractérisé en ce que** le corps de base (16) du rivet aveugle (8) est ouvert à son extrémité éloignée des pièces (2, 4).

14. Dispositif selon une des revendications précédentes, **caractérisé en ce que** le trou de fixation (40) de l'autre pièce (4) est circulaire et a un diamètre qui correspond au diamètre extérieur du filet (10) de la vis (6).

15. Dispositif selon une des revendications précédentes, **caractérisé en ce que** le corps de base (16) du rivet aveugle (8) possède, sur son côté extérieur, des rugosités (38) qui servent de système antiperte.

16. Dispositif selon une des revendications précédentes, **caractérisé en ce que** la vis (6) est constituée en tant que vis autotaraudeuse qui forme un filet correspondant lors du vissage dans un tronçon d'alésage (22), constitué de façon lisse, de l'alésage de réception (20) du corps de base (16) du rivet aveugle (8).

17. Dispositif selon une des revendications 1 à 15, **caractérisé en ce que** l'alésage de réception (20) du corps de base (16) du rivet aveugle (8) a un filet préformé.

18. Dispositif selon une des revendications précédentes, **caractérisé en ce que** la vis (6) est composée de matière plastique ou de métal.

19. Dispositif selon une des revendications précédentes, **caractérisé en ce que** le rivet aveugle (8) est composé d'un polyamide résilient ou d'une autre matière plastique résiliente.

20. Dispositif selon une des revendications 1 à 15, **caractérisé en ce que** le rivet aveugle (8) est composé d'une matière plastique élastomère ou de caoutchouc.

21. Rivet aveugle pour un dispositif selon une des revendications précédentes.
